# EUROPEAN PATENT SPECIFICATION

(11) **EP 4 513 290 B1**
(45) Date of publication and mention of the grant of the patent: **20.05.2026**
(21) Application number: 23193468.8
(22) Date of filing: 25.08.2023
(51) Int. Cl.: G05D 1/00, G05D 1/243, G05D 1/633, G05D 1/698, G05D 101/15, G05D 107/70, G05D 109/10, G05D 111/10, G05D 105/28

(54) **METHOD AND SYSTEM FOR MANAGING NAVIGATION OF AGV IN DYNAMIC ENVIRONMENT**
VERFAHREN UND SYSTEM ZUR VERWALTUNG DER NAVIGATION EINES AGV IN EINER DYNAMISCHEN UMGEBUNG
PROCÉDÉ ET SYSTÈME DE GESTION DE NAVIGATION D'UN AGV DANS UN ENVIRONNEMENT DYNAMIQUE

(43) Date of publication of application: 26.02.2025
(73) Proprietor: Siemens Aktiengesellschaft, 80333 München (DE)
(72) Inventor: JANARDHANAN, Shaiju, 670303 Kannur, Kerala (IN); SOORAJ PS, Arun, 560099 Electronic City, Karnataka (IN)
(74) Representative: HKW Intellectual Property PartG mbB

(56) References cited:
- US-A1- 2022 119 195
- US-A1- 2022 317 691
- US-A1- 2022 317 695

## Description

The present invention relates generally to navigation of Autonomous Guided Vehicles (AGV), and more specifically to a method and system for managing navigation of multiple AGVs in a dynamic environment using reinforcement learning by pooling various changes in status of the dynamic environment between the multiple AGVs.

Automated Guided Vehicles (AGVs) are autonomous mobile robots that are designed to be used in industrial applications to transport heavy materials, products, or goods without or with very less human intervention in various environments such as factory or warehouse. The AGVs navigate and operate autonomously by following marked lines or wires on a floor, radio waves, vision cameras, magnets, or lasers. The AGVs plays a vital role in automating of various industrial applications, thereby reducing human error, and increasing efficiency and speed of operation.

The AGVs generally include Object detection systems for obtaining environmental information which enable the AGVs to understand its surroundings. The object detection systems are able to identify objects lying in navigation path of the AGVs and influence steering of the AGVs around such objects. The AGVs are trained initially by manually driving it around the environment via a remote by a human operator and enough images of the factory floor are captured along with some obstacles or objects. Further, training is performed using these images and the AGV learns to detect the obstacles, avoid them, and move to its destination without colliding. But in a dynamic factory floor where object placements are not constant this training methodology will prove to be costly. Also, the benefit of Autonomous guidance is lost as there is a human involvement every time the layout changes, to capture new images by driving the AGV. Furthermore, not all data in the factory floor can be created synthetically during the training period and the AGV will have to learn while operating in the factory floor itself.

In some conventional methods and systems, every time the AGV recognizes a change in object positions for which it is not trained on, it uses an obstacle avoidance algorithm to navigate around the obstacle and reach its destination. This process is slower than when the AGV moves with assistance from its pretrained model. If every AGV has to do this, then the whole factory automation would become slower till the AGVs learn enough information to confidently move around in the new layout. But the layout may again change and this whole process might repeat. Also, it is possible that some AGVs crash against obstacles in such a changed layout. It learns from this crash and avoids it the next time by retraining itself using the captured data. So, overtime, the AGVs on the factory floor might be at different sophistications to avoid and navigate around obstacles. This is not desirable, as all the AGVs are required to be at the same level of understanding of its surroundings.

US 2022/317695 A1 relates to a multi-AGV motion planning method, device and system. The method of the present disclosure comprises: establishing an object model through reinforcement learning, building a neural network model based on the object model, performing environment settings including AGV group deployment, and using the object model of the AGV in a set environment to train the neural network model until a stable neural network model is obtained. The method further comprises setting an action constraint rule and after the motion planning is started, inputting the state of current AGV, states of other AGVs and permitted actions in a current environment into the neural network model after trained, obtaining the evaluation indexes of a motion planning result output by the neural network model, obtaining an action to be executed of the current AGV according to the evaluation indexes, and performing validity judgment on the action to be executed using the action constraint rule.

US 2022/119195 A1 discloses a system and a method that identifies a source area within a facility comprising a plurality of objects and determines a destination area within the facility to which the plurality of objects are to be transported and unloaded. The system selects robots within the facility based a capability of the robots and/or a location of the robots within the facility. The system provides an instruction to the robots to transport the plurality of objects from the source area to the destination area. The robots are configured to autonomously select an object based on a position and location of the object within the source area, transport the selected object to a destination area along a route selected by the robot, and unload the selected object at a location within the destination area selected based on a number of objects yet to be unloaded within the destination area.

US 2022/317691 A1 discloses a crop monitoring system that may include an observation robot, a centralized server, and a user device. An observation robot may be autonomous. The observation robot may include a suite of sensors. The observation robot may include two cameras oriented towards opposite sides of the observation robot to capture images of plants on either side of the observation robot. The centralized server may store and/or execute various instructions for operating and/or communicating with the observation robot. The centralized server may store and/or execute various instructions for processing data such as images, sensor measurements, and environmental data obtained from the observation robot. The centralized server may store and/or execute various instructions for analyzing such data. The centralized server may store and/or execute various instructions for presenting the data to a user, such as via the user device.

In light of the above, there remains a need for an improved method of training the AGVs in the dynamic environment. When there are multiple AGVs coordinating and communicating with each other there needs to be a technique by which the learning of the obstacles or changes in the surrounding, by one AGV must be communicated to the other AGVs without the other AGVs having to face the same obstacles.

The present invention seeks to overcome these challenges by pooling a status of change in a model of active AGVs at passive AGVs which are lodged at a for example, a charging area. The passive AGV notes the status of change in the model of the active AGVs and trains its own corresponding model based on the status of change in the model of the active AGVs. As a result, when the passive AGV gets into active state, the passive AGV will be able to overcome the obstacles in navigation without having to actually face the obstacles in the dynamic environment. Therefore, the revised approach enhances the efficiency of navigation of the AGVs used in the dynamic environment such as the factory floor.

The invention is defined in the appended set of claims. Exemplary aspects and embodiments are described in the following to illustrate the invention.

The object of the present invention is achieved by a computer-implemented method for managing navigation of Autonomous Guided Vehicles (AGV) in a dynamic environment. The method includes sending, by at least one passive AGV of a plurality of AGVs, broadcast to at least one active AGV of the plurality of AGVs requesting for a status of change in at least one model of a plurality of models of the at least one active AGV, wherein the plurality of models of the at least one active AGV are used by a decision service and an object detection service of the at least one active AGV for navigation. The method also includes receiving, by the at least one passive AGV, the status of change in the at least one model of the plurality of models of the at least one active AGV, in response to the broadcast. Further, the method includes determining, by the at least one passive AGV, the change in the at least one model of the plurality of models of the at least one active AGV; training, by the at least one passive AGV, at least one corresponding model of the at least one passive AGV based on the change in the at least one model of the plurality of models of the at least one active AGV, for navigating in the dynamic environment and managing, by the at least one passive AGV, the navigation of the at least one passive AGV when the at least one passive AGV becomes active in the dynamic environment based on the trained at least one corresponding model of the at least one passive AGV.

In one or more embodiments, training of the at least one corresponding model of the at least one passive AGV is performed using a reinforcement learning service.

In one or more embodiments, the navigation in the dynamic environment is based on a current position of the at least one active AGV within the dynamic environment and at least one object encountered by the at least one active AGV in its navigation path, wherein the at least one object encountered by the at least one active AGV in its navigation path is provided by the object detection service of the at least one active AGV.

In one or more embodiments, the at least one passive AGV is parked in a charging area of the dynamic environment.

In one or more embodiments, the method further comprises storing files associated with training the at least one corresponding model of the at least one passive AGV to be used by the object detection service and the decision service when the at least one passive AGV becomes active.

In one or more embodiments, the method further comprises navigating by the at least one passive AGV, on becoming active in the dynamic environment based on the trained at least one corresponding model of the at least one passive AGV.

In one or more embodiments, the status of change in the at least one model of the plurality of models of the at least one active AGV is determined based on change in weight files associated with training the at least one model of the plurality of models of the at least one active AGV and wherein the change in weight files is representative of at least one change in the dynamic environment since a last communication between the at least one active AGV and the at least one passive.

In one or more embodiments, the at least one change in the dynamic environment is determined by the object detection service based on images of the dynamic environment and wherein the object detection service sends an inference of the to the at least one change in the dynamic environment to the decision service.

In one or more embodiments, the decision service uses the at least one corresponding model trained by the reinforcement learning service to generate at least one instruction for the at least one passive AGV when the at least one passive AGV becomes active.

The object of the present invention is also achieved by a navigation management unit of an Autonomous Guided Vehicle (AGV) for managing navigation of Autonomous Guided Vehicles (AGVs) in a dynamic environment. The navigation management unit includes an interface configured to send broadcast to at least one active AGV of the plurality of AGVs requesting for a status of change in at least one model of a plurality of models of the at least one active AGV, wherein the plurality of models of the at least one active AGV are used by a decision service and an object detection service of the at least one active AGV for navigation. The navigation management unit includes a processor and a memory coupled to the processor, wherein the memory comprises instructions which, when executed by the processor, configures the processor to receive the status of change in the at least one model of the plurality of models of the at least one active AGV, in response to the broadcast sent by the at least one passive AGV. The processor is also configured to determine the change in the at least one model of the plurality of models of the at least one active AGV and train at least one corresponding model of the at least one passive AGV based on the change in the at least one model of the plurality of models of the at least one active AGV, for navigating in the dynamic environment.

In embodiments, the unit and/or the system as claimed is implemented to carry out the method as indicated above or below with respect to embodiments of the method.

The object of the present invention is further achieved by a computer program code which, when executed by a processor, cause the processor to carry out steps of the aforementioned method.

The object of the present invention is further achieved by a computer program product comprising computer program code which, when executed by a processor, cause the processor to carry out steps of the aforementioned method.

A more complete appreciation of the present invention and many of the attendant aspects thereof will be readily obtained as the same becomes better understood by reference to the following description when considered in connection with the accompanying drawings:
FIG 1 is a flowchart representation of a computer-implemented method for managing navigation of Autonomous Guided Vehicles (AGV) in a dynamic environment, in accordance with one or more embodiments of the present invention;
FIG 2 is a block diagram representation of a system for managing navigation of the AGV in the dynamic environment, in accordance with one or more embodiments of the present invention;
FIG 3 is a block diagram representation of a navigation management unit of the system for managing navigation of the AGV in the dynamic environment, in accordance with one or more embodiments of the present invention;
FIG 4A is an exemplary depiction of a dynamic environment such as factory floor where the AGVs operate, in accordance with prior arts;
FIG 4B is an exemplary depiction pooling of status of change of models of active AGV at passive AGVs in the dynamic environment, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing navigation of Autonomous Guided Vehicles (AGV) in a dynamic environment are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Conventional methods and systems, use federated learning approach for mobile devices where each individual device downloads a base model from a remote server and then retrains it with its local data. The change in the model is then updated to the remote server. When several such devices add changes to the remote model, then after some time the model at the remote server would be trained using data from all devices.

Unlike to the conventional methods and the systems, the proposed solution does not have a centralized server where a single model is maintained. In the proposed solution, the AGVs fetch data from other AGVs during its idle time and use that data to improve its model to identify and avoid obstacles better.

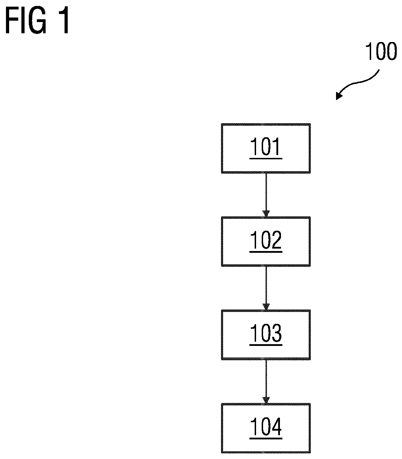

Referring now to FIG 1, illustrated is a flowchart of a method (as represented by reference numeral 100) for managing navigation of Autonomous Guided Vehicles (AGV) in a dynamic environment, in accordance with an embodiment of the present invention. As used herein, managing navigation refers to movement of the AGVs in a large dynamic environment like a factory floor, without colliding with any of the objects in the dynamic environment. This approach aims to manage the navigation of the AGVs by pooling in the changes in the dynamic environment experienced by active AGVs at passive AGVs, for example the AGVs which are docketed at a charging area of the factory floor. The passive AGVs train their models based on the pooled data from the active AGVs. As a result, when the passive AGVs return to the active state after being charged, they are better equipped to navigate the dynamic environment as they have learnt based on the pooled data received from the active AGVs. This approach enhances the efficiency with which the AGVs are operated in the dynamic environment. When the AGVs operate in large areas such as warehouses or industrial area the proposed approach reduces the time required for training the AGVs and enhances operational efficiency.

As discussed, the present invention involves pooling in, the status of change in at least one model of plurality of models of the active AGVs, in response to a broadcast sent by the passive AGV. As used herein, the status of change in the at least one model of the plurality of models of the active AGVs occurs when new images are used to train the at least one model. The new images are generated when the active AGV encounters a new obstacle due to the environment being dynamic. The passive AGV which is docked at the charging station sends the broadcast to the active AGVs to send any changes in their models after the last communication with the passive AGV. Accordingly, the active AGVs which have encountered change in their models will send the status of the change to the passive AGV. Based on the received status of the change and also the cause of the change in the form of images or videos or coordinates, the passive AGV trains its corresponding model. As a result, when the passive AGV goes into the active state, the passive AGV is well aware of navigating the obstacle which led to the change in the model of the other active AGV. This enhances the overall operational efficiency.

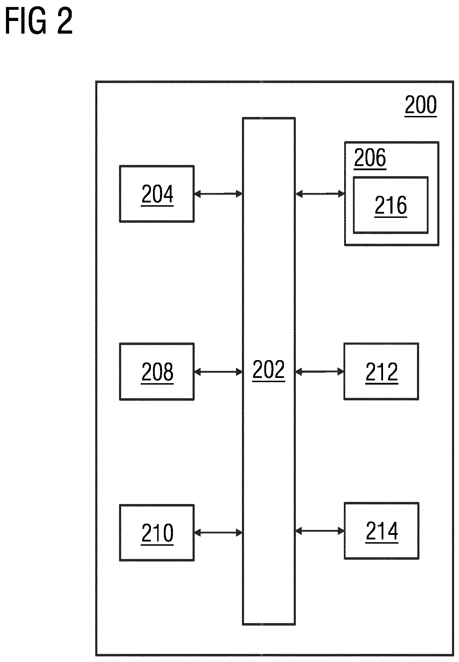

Referring to FIG 2, illustrated is a block diagram of a system 200 for managing navigation of the AGVs in the dynamic environment, in accordance with one or more embodiments of the present invention. It may be appreciated that the system 200 described herein may be implemented in various forms of hardware, software, firmware, special purpose processors, or a combination thereof. In an example, the system 200 may be for example an AGV itself. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips of the AGV). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more applicationspecific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 includes weight files associated with training a corresponding model of the at least one passive AGV to be used by an object detection service and a decision service when the at least one passive AGV becomes active.

The system 200 further includes a user interface 212. The user interface 212 may take various forms depending on the specific application of the system 200. In an example, the user interface 212 may include one or more of a keyboard, a mouse, a touchscreen display, a microphone, or any other hardware component that enables the user to interact with the system 200. Further, the user interface 212 may also be in the form of a display to receive inputs and also display an output response. It is to be understood that, when reference is made in the present invention to the term "display" this refers generically either to a display screen on its own or to the screen and an associated housing, drive circuitry and possibly a physical supporting structure, of which all, or part of is provided for displaying information as part of the AGVs.

The system 200 further includes a sensor unit 214. The sensor unit 214 includes multiple sensors provided to capture a change in the dynamic environment. The multiple sensors can be for example but not limited to vision sensors, motion sensors, infrared sensors, ultrasonic sensors, microwave sensors, tomographic sensors, etc. The sensor unit 214 captures videos or images of the dynamic environment to identify any change in the environment. The environment is dynamic such as for example consider a factory floor where new equipment may be added, or existing equipment may be moved from its original position. As a result, the active AGVs will keep encountering new obstacles in an old path which the active AGV had previously traversed. The sensor unit 214 detects the changes in the dynamic environment by comparing real-time images of the dynamic environment with the images captured a previous time of a same location before the change in the environment occurred.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for managing the navigation of the AGV in the dynamic environment. In particular, the memory 206 includes a navigation management unit 216 to perform steps for managing the navigation of the AGV in the dynamic environment. Also, in the system 200, the memory 206 may be configured to store the data associated with or generated by the execution of the inventive steps.

Referring to FIGS 1 and 2 in combination, the various steps of the method 100 as described hereinafter may be executed in the system 200, or specifically in the processor 204 of the system 200, for - managing the navigation of the AGV in the dynamic environment. For purposes of the present invention, the managing the navigation of the AGV in the dynamic environment present method 100 is embodied as a training algorithm for training the AGVs for managing the navigation in the dynamic environment. It may be appreciated that although the method 100 is illustrated and described as a sequence of steps, it may be contemplated that various embodiments of the method 100 may be performed in any order or a combination and need not include all of the illustrated steps.

In embodiments of the present invention, at step 101, the method 100 includes the at least one passive AGV of the plurality of AGVs sending broadcast to the at least one active AGV of the plurality of AGVs in the dynamic environment, requesting for a status of change in at least one model of a plurality of models of the at least one active AGV. Here, the terms active AGV and passive AGV are representative of a state of motion of the AGV and may not be fixed for any AGV in the dynamic environment. The broadcast is sent by the passive AGVs which are stationary due to various reasons such as for example but not limited to being docked at charging station, maintenance, docked for being loaded with some goods, etc. The passive AGVs hence make use of the idle time to contact all other active AGVs to determine if there is any change in the models from the previous time the passive AGVs had contacted the active AGVs. The environment is dynamic such as for example consider a factory floor, a warehouse, a dockyard, a container yard, etc where new equipment may be added, or existing equipment may be moved from its original position. As a result, the active AGVs will keep encountering new obstacles in an old path which the active AGV had previously traversed.

The broadcast is sent to all the active AGVs, simultaneously which are operational in the dynamic environment such as the factory floor. The broadcast is an example one-to-many for conveying the message by the passive AGVs to the active AGVs. The broadcast can be sent through protocols such as for example but not limited to Simple Service Discovery Protocol (SSDP), Internet Protocol (IP), Real-time Transport Protocol (RTP), etc. Here, both the active AGVs and the passive AGVs comprises multiple models used in its training and operation. The models may be for example but not limited to machine learning (ML) models, deep learning models, etc.

To send the broadcast, the system 200 may interface with a AGV management system through an Application Programming Interface (API) or other data exchange mechanisms, via the interface 208. Once the broadcast has been obtained, those can be stored in the database 210, which serves as a central repository for the data required by the system 200. The database 210 may be designed using relational or non-relational database management systems, depending on the specific requirements and preferences of the system 200.

At step 102, the method 100 includes receiving by the at least one passive AGV the status of change in the at least one model of the plurality of models of the at least one active AGV. Generally, when the active AGVs move around the factory floor and identifies any changes in the environment, the active AGVs detect an obstacle, store the path of the obstacle, details associated with the obstacle, images related to the obstacle, images related to the path of the obstacle and navigates around the obstacle by taking decision to avoid the obstacle. Further, the active AGVs also perform object detection to generate inference data.

All this data is used to re-train the models of the active AGVs, and the data is also stored in the memory 206 of the active AGVs. Therefore, when the active AGVs receives the broadcast from the passive AGVs requesting for the status of the change in the model of the active AGV, it responds by sending the status of the change in the model, if any. Further, the status of the change in model of the active AGV may be sent as a broadcast to all the passive AGVs or in form of any other message.

At step 103, the method 100 includes determining by the at least one passive AGV the change in the at least one model of the at least one active AGV and data that caused the change in the at least one model of the at least one active AGV based on the received status of change of the model. Here every time the model of the active AGV is retrained using new images representative of the change in the environment and other data, there occurs a change in parameters of the model of the active AGV which are saved as weights files at the end of training. Therefore, when the active AGV sends the status of the change in the model to the passive AGVs, the latest weight files, the inference data and the data that caused the change in the weights file of the active AGVs are all sent by the active AGVs.

Each of the passive AGVs receives the pool of the status of the change in the models from all the active AGVs and the other data mentioned above. The passive AGVs then uses the change in the weight files of each of the AGVs to identify the specific changes in the dynamic environment. Here, since each of the passive AGVs are receiving the pool of the status of change in the model data from all the active AGVs, all the changes in the dynamic environment are now known to the passive AGVs even without the passive AGVs encountering the obstacles or the collision by itself. Therefore, the proposed system solves the problems by establishing video and inference data sharing between the active AGVs and the passive AGVs so that most of the possible scenarios encountered within the factory floor are pooled together.

At step 104, the method 100 includes training by the at least one passive AGV at least one corresponding model of the at least one passive AGV based on the change in the at least one model of the plurality of models of the at least one active AGV and the data that caused the change in the at least one model of the plurality of models of the at least one active AGV. Once the passive AGVs have identified the models which have undergone changes due to change in the dynamic environment based on the status of change in the models of the active AGVs, the passive AGVs will identify the corresponding models within themselves which needs to be trained. Further, the pool of the status of the change in the models received from all the active AGVs, the inference data and the data that caused the change in the weights file of the active AGVs are all used by each of the passive AGVs to train the identified corresponding models of themselves.

For example, if there are changes to the decision models of the active AGVs then the decision model of the passive AGVs is trained using the weights file of all the active AGVs which have undergone changes in its decision model, the inference data and the data that caused the change in the weights file of those active AGVs. Therefore, the decision model of each of the passive AGVs are now well equipped to take decisions in the dynamic environment without the passive AGVs having to encounter the scenarios encountered by the active AGVs which led to the changes in their decision model.

At step 105, the method 100 includes managing the navigation of the at least one passive AGV when the at least one passive AGV becomes active in the dynamic environment based on the trained at least one corresponding model of the at least one passive AGV. Here, when the passive AGVs moves into the active state after completing the charging the passive AGVs become the active AGVs. The management of the navigation of the passive AGVs once they become active is managed based on the trained corresponding model. Here, management of the navigation is the decisions that the AGV will have to take when the passive AGVs becomes the active AGVs, and the said obstacle is encountered.

In present embodiments, the method 100 further includes navigating by the at least one passive AGV when on becoming active in the dynamic environment based on the trained at least one corresponding model of the at least one passive AGV. The AGV navigates through the factory floor seamlessly due to the training of its models based on the data received from all the active AGVs. Therefore, rather than going through the list of possible decisions it can make, the AGV is well aware of the decision it needs to take based on the training. As a result, the repeated on-floor training of the AGVs when the obstacles are encountered is avoided. This helps in saving the processing time of the AGVs and increasing the speed of operation of the AGVs within the dynamic environment.

Therefore, the proposed solution provides improved scalability of the system 200, self-adaptation to the changes in the factory floor, does not require a centralized system to share the data between the AGVs and also stationary sensors like cameras are used which makes the system 200 simple and efficient to be deployed. The proposed solution does not have a centralized server where a single model is maintained, instead the AGVs fetch data from other AGVs during its idle time and use that data to improve its model to identify and avoid obstacles better. Therefore, the proposed solution is very useful in warehouse applications and is cost effective for implementation with reduced processing time and enhanced efficiency.

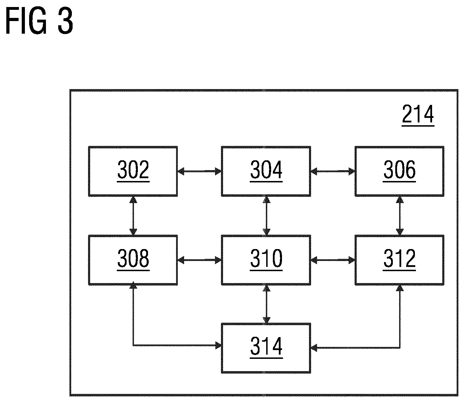

FIG 3 is a block diagram representation of the navigation management unit 214 of the system 200 for managing the navigation of the AGV in the dynamic environment, in accordance with one or more embodiments of the present invention. Further, herein, the navigation management unit 214 includes various logical units or services which enable the management of the navigation of the AGVs within the dynamic environment. The service of the navigation management unit 214 includes object detection service 302, a reinforcement learning service 304, a monitoring service 306, a power control service 308, an image processing service 310, a decision service 312 and a navigation service 314.

In the proposed embodiments, the object detection service 302 is trained to identify new obstacles in the path of the AGV. For this the AGV is initially driven throughout the factory floor and multiple videos or images of the various objects within the factory floor along with the location of the objects is recorded. Then recorded content is then used to train the object detection service 302. Also, when the AGV is in the passive state the status of change in the models shared by the active AGVs is used to train the object detection service 302. Therefore, the object detection service 302 becomes capable of identifying objects without the passive AGV itself encountering the obstacle. As a result, the processing time is reduced and the efficiency of the operation in the factory floor enhances significantly.

In the proposed embodiments, the reinforcement learning service 304 enables the decision service 312 to make a decision when the said obstacle is encountered by the AGV in the active state. Therefore, when the passive AGV is released from the charging dock and if it encounters the similar obstacle then the AGV is able take a decision quickly rather than going through the list of possible decisions it can make. The inference output of the object detection service used in the training of the object detection service 302 are used for training the reinforcement learning service 304. The reinforcement learning service 304 and the decision service 312 work in conjunction with each other.

In the proposed embodiments, the monitoring service 306 monitors a battery level of the AGVs and when the battery runs out of charge the monitoring service 306 raises alerts which causes the AGV to park itself and resume charging from any of the available charging points.

In the proposed embodiments, the power control service 308 is used to control the power levels and power consumption of the AGVs. It may also be used to automatically switch to a power saving mode when the power is below a certain level.

In the proposed embodiments, the image processing service 310 is used for preprocessing the images of the surrounding sent by the sensor unit 214 in the operational mode.

In the proposed embodiments, the decision service 312 is configured to take the decision powered by the reinforcement learning service 304. The decision service 312 takes the decisions on the navigation of the AGV when a specific scenario is encountered. Then the output of the decision service 312 is sent to the navigation service 314.

The decision service 312 along with the reinforcement learning service 304 ensures that it takes the best decision in a particular scenario. Each scenario is defined by two critical parameters among many. One is a current position of the AGV within the factory floor and the second is details of any objects it encounters in its navigation path provided by the object detection service 302. Based on the object detection and current location of the AGV with respect to its destination, an optimal decision is provided by the decision service 312 that allows the system 200 to navigate and avoid obstacles while following the optimal path to the destination.

Further, it may be noted that both the decision service 312 and the object detection service 302 make use of the models. These models may be stored in several forms such as weight files, pickle files etc and they enable these services to make decisions based on the inputs provided to it. In the case of the object detection service 302 these inputs would be images extracted and processed from the camera 214 streams by the image processing service 310. The object detection service 302 uses the processed images and sends its inference to the decision service 312 which uses the model provided by the reinforcement learning service 304 and other inputs such as current position of the AGV, etc, to generate an optimal instruction for the AGV. Based on these inputs the decision service 312 produces instructions which is sent to the navigation service 314.

In the proposed embodiments, the navigation service 314 sends commands to move, stop and steer the AGVs based on the output of the decision service 312. The navigation service 314 translates the instructions from the decision service 312 into commands for a drive train of the system 200.

Each AGV navigates based on the input provided by the decision service 312. In order to ensure that the decision service 312 makes the best decision in a scenario it is necessary that the reinforcement learning service 304 gets trained on as many scenarios as possible. When the AGV is in its active state, where it is operating on the factory floor the decision service 312, the image processing service 310 and the object detection service 302 are active, but when the AGV enters a passive state such as in maintenance or during its recharge period then the object detection service 302 and the reinforcement learning service 304 become active.

Therefore, in the proposed solution the active AGVs move to the charging dock to be charged and make use of the idle time to contact all other active AGVs to see if there is any change in the models from the last time, they had contacted that other AGV. The passive AGVs uses the data received from the active AGVs to train itself i.e., train its object detection service 302 to identify new obstacles and its reinforcement learning service 304 to make a decision when the said obstacle is encountered. This enables the passive AGV when released from the charging dock to take a decision quickly when it encounters the similar obstacle. Rather than going through the list of possible decisions it can make, the AGV is well aware of the decision it needs to take based on the training.

The proposed solution reduces the human intervention and training of each AGV based on the AGV itself encountering the obstacles by establishing video and inference data sharing between the AGVs so that most of the possible scenarios encountered within the factory floor, by the AGVs are pooled together.

Therefore, in the proposed solution each AGV is trained using the data from other AGVs during the time the AGV is idle such as when it is under maintenance or charging. The passive AGVs send requests to the different AGVs to get the data they captured from the last 12 hrs (assuming that the AGVs need to be charged every 12 hrs) in case there was a change in the model used within those AGVs. This data is then processed within the passive AGV and then its retrained to avoid obstacles and hence crashes.

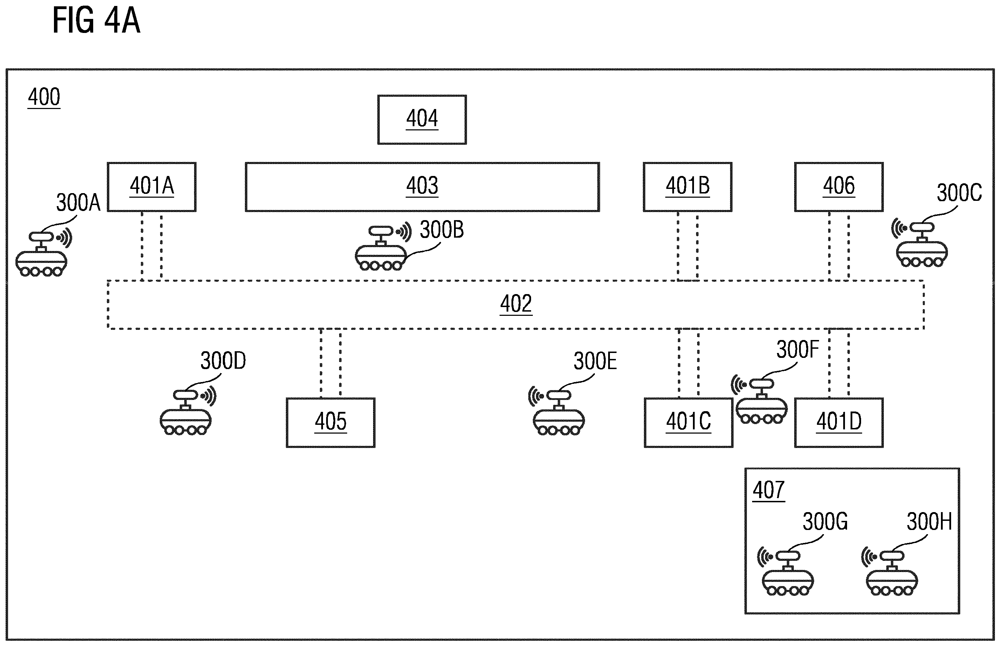

FIG 4A is an exemplary depiction of a dynamic environment such as factory floor where the AGVs operate, in accordance with prior arts. Referring to the FIG. 4A, consider a dynamic environment such as for example, a factory floor 400. Consider that the factory floor 400 includes multiple equipment 401A-401D arranged in various positions, a conveyor 403 between two equipment 401A and 401B, a dumping area 405 and a sorting area 406. There are also multiple active AGVs 300A-300F which are navigating through the factory floor 400 and multiple passive AGVs 300G and 300H which are stationed at an AGV charging area 407, where the AGVs park themselves and connect to the charger when AGV battery level falls below a threshold. There are pathways 402 in between for personnel and AGVs to move around. The AGVs 300A-300H communicate with each other via a centralized router 404 within the factory floor 400 as the centralized router 404 puts all the AGVs on the factory floor 400 within a same network. The centralized router 404 does not include an internet connectivity and the centralized router 404 is used to allow inter AGV communication.

When a new AGV is added to the factory floor 400, the new AGV is configured with router configuration. The new AGV then broadcasts its capabilities to the other AGVs through the centralized router 404 and checks if there are any other AGVs in the network. Once the AGV receives a broadcast, it responds to the sender with its details such as IP, Type, Identifiers etc. Thus, over a period of time, all the AGVs become aware of all the other AGVs on the factory floor 400 and can send or receive a unicast, multicast or broadcast to each other. The active AGV 401A performs various tasks by navigating through the factory floor 400 without external assistance. To be able to understand its surroundings the AGVs make use of the environmental information provided by the object detection systems of the AGVs. The object detection systems are able to identify objects lying in the navigation path of the AGVs and influence the steering of the AGVs around such objects.

To train any AGV say for example the active AGV 401A, the active AGV 401A is manually driven via a remote by a human operator and multiple images or videos of the factory floor 400 are captured along with some obstacles (i.e., new equipment or new position of existing equipment, etc). Then, the active AGV 401A is trained using the multiple images or videos of the factory floor 400. As a result, the active AGV 401A learns to detect the obstacles, avoid the obstacles, and navigate through the factory floor 400 to its destination without colliding with any of the obstacles.

However, the existing technical solutions does not take into consideration the fact that the factory floor 400 is dynamic and object placements are not constant hence the existing training methodology becomes expensive to a factory operator. Also, every time the AGV recognizes a change in object positions for which it is not trained, the AGV generally uses an obstacle avoidance system to navigate around the obstacle and reach its destination. If every AGV has to do repeat using the obstacle avoidance system every time, there is a change in the object position in the factory floor 400 then the speed of the entire factory automation reduces till all the AGVs learn enough information to efficiently move around in the new layout without collision. However, the layout may again change and the whole process might need to be repeated by the AGVs. Also, consider scenarios where some AGVs crash against obstacles in the changed layout and learns from the crash to avoid it the next time by retraining itself using the captured data. Therefore, overtime, the AGVs on the factory floor 400 might be at different sophistications to avoid and navigate around the obstacles, which is not desirable. Further, the benefit of autonomous guidance is lost as there is a human involvement every time the layout changes to capture new images by driving the AGV through the changed factory floor 400.

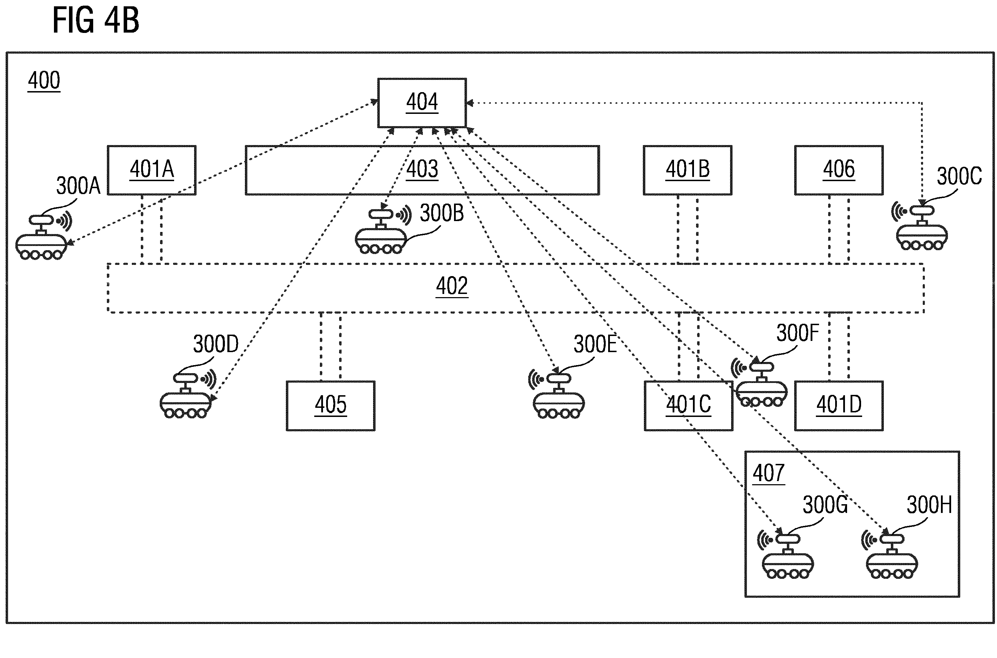

FIG 4B is an exemplary depiction of pooling of the status of change of the models of the active AGVs 300A-300F at the passive AGVs 300G-300H in the dynamic environment, in accordance with one or more embodiments of the present invention. Referring to the FIG. 4B, in conjunction with the FIG. 4A, the passive AGVs 300G-300H sends a broadcast to all the active AGVs 300A-300F requesting to send the change in the status of their models.

The active AGVs 300A-300F that receive the broadcast from the passive AGVs 300G-300H responds with status of its model change since the last communication with the same passive AGVs 300G-300H. If there is a change in the model, then the passive AGVs 300G-300H requests the data that was associated with the training of the model in the active AGVs 300A-300F. The data associated with the training of the model may include but not limited to images for training the object detection service 302 and the inference outputs from the object detection service 302 for training the reinforcement learning service 304. The active AGVs 300A-300F sends these data which are then used by the passive AGVs 300G-300H for training itself.

The training of the passive AGVs 300G-300H involves improving the Object detection service 302 of itself, for better object identification and the Reinforcement learning service 304 to learn new scenarios and make optimal decisions in response to those scenarios. The model files generated from these trainings are then stored in the database 210 to be used by the object detection service 302 and the decision service 312 when the AGV becomes active again.

Therefore, in the proposed solution, the idle time of the passive AGVs 300G-300H which might be a few hours are used to pool the data from all the active AGVs 300A-300F to ensure that all the AGVs 300A-300H are at the same maturity level with respect to understanding and navigating the dynamic environment in which they operate.

Thus, the method 100 and the system 200 of the present invention implements a navigation management approach for AGVs to navigate seamlessly without any human interference with the same level of understanding of the dynamic environment in which they operate. The approach introduces pooling of the status of the change in the models associated with the decision service and the object detection service of each of the active AGVs, at the passive AGVs which are parked for charging at the charging dock. This approach has the potential to significantly enhance the efficiency of navigation and also reduce the training time of each of the AGVs and thereby significantly enhance the ease of operation of the AGVs in the dynamic environment. The proposed navigation algorithm can be integrated with existing warehouse applications which use AGVs, for training of the AGVs on the go and also to make the navigation of the AGVs within the dynamic environment faster, reduce collisions and seamlessly.

Therefore, the proposed solution manages the navigation of the AGVs in the dynamic environment like the factory floor. The videos captured by each of the active AGVs in motion is pooled in any one of the passive AGVs which is at rest. The object detection is performed by each of the AGVs in motion to generate inference data which also gets pooled in any of the AGVs at rest. Further, a navigation algorithm is trained by the passive AGVs at rest, using the pooled inference data as a training set, via reinforcement learning. The object detection algorithm is also trained by the passive AGV using the pooled data continuously. Once an AGV at rest starts moving, some other AGV, which is at rest would take up the responsibility of pooling the data and learning from it. Hence the proposed solution ensures continuous learning based on the dynamic environment.

### Reference Numerals

- 100: method
- 101: step
- 102: step
- 103: step
- 104: step
- 105: step
- 200: system
- 202: bus
- 204: processor
- 206: memory
- 208: interface
- 210: database
- 212: transceiver
- 214: sensors
- 216: navigation management unit
- 300A-300H: AGVs
- 300A-300F: Active AGVs
- 300G-300H: Passive AGVs
- 302: Object detection service
- 304: Reinforcement learning service
- 306: Monitoring service
- 308: Power control service
- 310: Image processing service
- 312: Decision service
- 314: Navigation service
- 400: Factory floor
- 401a: Equipment 1
- 401b: Equipment 2
- 401c: Equipment 3
- 401d: Equipment 4
- 402: Pathways
- 403: Conveyer
- 404: Router
- 405: Dumping area
- 406: Sorting area
- 407: Charging area

## Claims

1. A method (100) for managing navigation of Autonomous Guided Vehicles (AGV) in a dynamic environment, the method (100) comprising:
sending (101), by at least one passive AGV of a plurality of AGVs, broadcast to at least one active AGV of the plurality of AGVs requesting for a status of change in at least one model of a plurality of models of the at least one active AGV, wherein the plurality of models of the at least one active AGV are used by a decision service (312) and an object detection service (302) of the at least one active AGV for navigation;
receiving (102), by the at least one passive AGV, the status of change in the at least one model of the plurality of models of the at least one active AGV, in response to the broadcast;
determining (103), by the at least one passive AGV, the change in the at least one model of the plurality of models of the at least one active AGV and data that caused the change in the at least one model of the plurality of models of the at least one active AGV;
training (104), by the at least one passive AGV, at least one corresponding model of the at least one passive AGV based on the change in the at least one model of the plurality of models of the at least one active AGV and the data that caused the change in the at least one model of the plurality of models of the at least one active AGV; and
managing (105), by the at least one passive AGV, the navigation of the at least one passive AGV when the at least one passive AGV becomes active in the dynamic environment based on the trained at least one corresponding model of the at least one passive AGV.

2. The method (100) according to claim 1, wherein training of the at least one corresponding model of the at least one passive AGV is performed using a reinforcement learning service (304).

3. The method (100) according to claim 1 or 2, wherein the navigation in the dynamic environment is based on a current position of the at least one active AGV within the dynamic environment and at least one object encountered by the at least one active AGV in its navigation path, wherein the at least one object encountered by the at least one active AGV in its navigation path is provided by the object detection service (302) of the at least one active AGV.

4. The method (100) according to any one of claims 1 - 3, wherein the at least one passive AGV is parked in a charging area of the dynamic environment.

5. The method (100) according to any one of claims 1 - 4, further comprising:
storing weight files associated with training the at least one corresponding model of the at least one passive AGV to be used by the object detection service (302) and the decision service (312) when of the at least one passive AGV when the at least one passive AGV becomes active.

6. The method (100) according to any one of claims 1 - 5, wherein the status of change in the at least one model of the plurality of models of the at least one active AGV is determined based on change in weight files associated with training of the at least one model of the plurality of models of the at least one active AGV and wherein the change in weight files is representative of at least one change in the dynamic environment since a last communication between the at least one active AGV and the at least one passive.

7. The method (100) according to claim 6, wherein the at least one change in the dynamic environment is determined by the object detection service (302) based on images of the dynamic environment and wherein the object detection service (302) sends an inference of the to the at least one change in the dynamic environment to the decision service (312).

8. The method (100) according to claim 7, wherein the decision service (312) uses the at least one corresponding model trained by the reinforcement learning service (304) to generate at least one instruction for the at least one passive AGV when the at least one passive AGV becomes active.

9. The method (100) according to any one of claims 1 - 8, further comprising:
navigating by the at least one passive AGV when on becoming active in the dynamic environment based on the trained at least one corresponding model of the at least one passive AGV.

10. A system (200) of an Autonomous Guided Vehicle (AGV) for managing navigation of Autonomous Guided Vehicles (AGVs) in a dynamic environment, the system (200) comprising:
an interface configured to send broadcast to at least one active AGV of the plurality of AGVs requesting for a status of change in at least one model of a plurality of models of the at least one active AGV, wherein the plurality of models of the at least one active AGV are used by a decision service and an object detection service of the at least one active AGV for navigation;
a processor (204); and
a memory (206) coupled to the processor (204), wherein the memory (206) comprises instructions which, when executed by the processor (204),
configures the processor (204) to:
receive the status of change in the at least one model of the plurality of models of the at least one active AGV, in response to the broadcast sent by the at least one passive AGV;
determine the change in the at least one model of the plurality of models of the at least one active AGV and data that caused the change in the at least one model of the plurality of models of the at least one active AGV;
train at least one corresponding model of the at least one passive AGV based on the change in the at least one model of the plurality of models of the at least one active AGV and the data that caused the change in the at least one model of the plurality of models of the at least one active AGV, for navigating in the dynamic environment; and
manage the navigation of the at least one passive AGV when the at least one passive AGV becomes active in the dynamic environment based on the trained at least one corresponding model of the at least one passive AGV.

11. A computer program product, comprising computer program code which, when executed by a processor (204), cause the processor (204) to carry out the method (100) of one of the claims 1 to 9.

12. A computer-readable medium comprising a computer program product comprising computer program code which, when executed by a processor (204), cause the processor (204) to carry out the method (100) of one of the claims 1 to 9.

## Patentansprüche

1. Verfahren (100) zum Verwalten der Navigation von autonomen geführten Fahrzeugen (Autonomous Guided Vehicles, AGV) in einer dynamischen Umgebung, wobei das Verfahren (100) Folgendes umfasst:
das Senden (101), durch mindestens ein passives AGV mehrerer AGV, eines Broadcasts an mindestens ein aktives AGV der mehreren AGV zur Anforderung eines Änderungsstatus in mindestens einem Modell mehrerer Modelle des mindestens einen aktiven AGV, wobei die mehreren Modelle des mindestens einen aktiven AGV von einem Entscheidungsdienst (312) und einem Objektdetektionsdienst (302) des mindestens einen aktiven AGV zur Navigation verwendet werden;
das Empfangen (102), durch mindestens ein passives AGV, des Änderungsstatus in dem mindestens einen Modell der mehreren Modelle des mindestens einen aktiven AGV als Reaktion auf den Broadcast;
das Bestimmen (103), durch das mindestens eine passive AGV, der Änderung in dem mindestens einen Modell der mehreren Modelle des mindestens einen aktiven AGV und der Daten, die die Änderung in dem mindestens einen Modell der mehreren Modelle des mindestens einen aktiven AGV verursacht haben;
das Trainieren (104), durch das mindestens eine passive AGV, mindestens eines entsprechenden Modells des mindestens einen passiven AGV basierend auf der Änderung des mindestens einen Modells der mehreren Modelle des mindestens einen aktiven AGV und den Daten, die die Änderung des mindestens einen Modells der mehreren Modelle des mindestens einen aktiven AGV verursacht haben; und
das Verwalten (105), durch das mindestens eine passive AGV, der Navigation des mindestens einen passiven AGV, wenn das mindestens eine passive AGV in der dynamischen Umgebung aktiv wird, basierend auf dem trainierten mindestens einen entsprechenden Modell des mindestens einen passiven AGV.

2. Verfahren (100) nach Anspruch 1, wobei das Trainieren des mindestens einen entsprechenden Modells des mindestens einen passiven AGV unter Verwendung eines Verstärkungslerndienstes (304) durchgeführt wird.

3. Verfahren (100) nach Anspruch 1 oder 2, wobei die Navigation in der dynamischen Umgebung auf einer aktuellen Position des mindestens einen aktiven AGV innerhalb der dynamischen Umgebung und mindestens eines Objekts basiert, das von dem mindestens einen aktiven AGV in seinem Navigationspfad angetroffen wird, wobei das mindestens eine Objekt, das durch das mindestens eine aktive AGV in seinem Navigationspfad angetroffen wird, durch den Objektdetektionsdienst (302) des mindestens einen aktiven AGV bereitgestellt wird.

4. Verfahren (100) nach einem der Ansprüche 1 - 3, wobei das mindestens eine passive AGV in einem Ladebereich der dynamischen Umgebung geparkt wird.

5. Verfahren (100) nach einem der Ansprüche 1 - 4, ferner umfassend:
Speichern von Gewichtungsdateien, die mit dem Trainieren des mindestens einen entsprechenden Modells des mindestens einen passiven AGV assoziiert sind, das von dem Objektdetektionsdienst (302) und dem Entscheidungsdienst (312) des mindestens einen passiven AGV zu verwenden ist, wenn das mindestens eine passive AGV aktiv wird.

6. Verfahren (100) nach einem der Ansprüche 1 - 5, wobei der Änderungsstatus in dem mindestens einen Modell der mehreren Modelle des mindestens einen aktiven AGV basierend auf einer Änderung der Gewichtungsdateien bestimmt wird, die mit dem Trainieren des mindestens einen Modells der mehreren Modelle des mindestens einen aktiven AGV assoziiert sind, und wobei die Änderung der Gewichtungsdateien für mindestens eine Änderung in der dynamischen Umgebung seit einer letzten Kommunikation zwischen dem mindestens einen aktiven AGV und dem mindestens einen passiven AGV repräsentativ ist.

7. Verfahren (100) nach Anspruch 6, wobei die mindestens eine Änderung in der dynamischen Umgebung durch den Objektdetektionsdienst (302) basierend auf Bildern der dynamischen Umgebung bestimmt wird und wobei der Objektdetektionsdienst (302) eine Schlussfolgerung zu der mindestens einen Änderung in der dynamischen Umgebung an den Entscheidungsdienst (312) sendet.

8. Verfahren (100) nach Anspruch 7, wobei der Entscheidungsdienst (312) das mindestens eine entsprechende Modell verwendet, das durch den Verstärkungslerndienst (304) trainiert wurde, um mindestens eine Anweisung für das mindestens eine passive AGV zu erzeugen, wenn das mindestens eine passive AGV aktiv wird.

9. Verfahren (100) nach einem der Ansprüche 1 - 8, ferner umfassend:
das Navigieren durch das mindestens eine passive AGV, wenn es in der dynamischen Umgebung aktiv wird, basierend auf dem trainierten mindestens einen entsprechenden Modell des mindestens einen passiven AGV.

10. System (200) eines autonomen geführten Fahrzeugs (Autonomous Guided Vehicle, AGV) zum Verwalten der Navigation von autonomen geführten Fahrzeugen (Autonomous Guided Vehicles, AGV) in einer dynamischen Umgebung, wobei das System (200) Folgendes umfasst:
eine Schnittstelle, die dazu ausgelegt ist, einen Broadcast an mindestens eine aktive AGV der mehreren AGV zu senden, die einen Änderungsstatus in mindestens einem Modell mehrerer Modelle des mindestens einen aktiven AGV anfordern, wobei die mehreren Modelle des mindestens einen aktiven AGV von einem Entscheidungsdienst und einem Objektdetektionsdienst des mindestens einen aktiven AGV zur Navigation verwendet werden;
einen Prozessor (204); und
einen Speicher (206), der mit dem Prozessor (204) gekoppelt ist, wobei der Speicher (206) Anweisungen umfasst, die, wenn sie durch den Prozessor (204) ausgeführt werden, den Prozessor (204) zu Folgendem konfigurieren:
Empfangen des Änderungsstatus in dem mindestens einen Modell der mehreren Modelle des mindestens einen aktiven AGV als Reaktion auf den Broadcast, der durch das mindestens eine passive AGV gesendet wird;
Bestimmen der Änderung in dem mindestens einen Modell der mehreren Modelle des mindestens einen aktiven AGV und von Daten, die die Änderung in dem mindestens einen Modell der mehreren Modelle des mindestens einen aktiven AGV verursacht haben;
Trainieren mindestens eines entsprechenden Modells des mindestens einen passiven AGV basierend auf der Änderung des mindestens einen Modells der mehreren Modelle des mindestens einen aktiven AGV und den Daten, die die Änderung des mindestens einen Modells der mehreren Modelle des mindestens einen aktiven AGV verursacht haben, zum Navigieren in der dynamischen Umgebung; und
Verwalten der Navigation des mindestens einen passiven AGV, wenn das mindestens eine passive AGV in der dynamischen Umgebung aktiv wird, basierend auf dem trainierten mindestens einen entsprechenden Modell des mindestens einen passiven AGV.

11. Computerprogrammprodukt, das Computerprogrammcode umfasst, der, wenn von einem Prozessor (204) ausgeführt, den Prozessor (204) zum Ausführen des Verfahrens (100) nach einem der Ansprüche 1 bis 9 veranlasst.

12. Computerlesbares Medium, umfassend ein Computerprogrammprodukt, das Computerprogrammcode umfasst, der, wenn von einem Prozessor (204) ausgeführt, den Prozessor (204) zum Durchführen des Verfahrens (100) nach einem der Ansprüche 1 bis 9 veranlasst.

## Revendications

1. Procédé (100) de gestion de la navigation de véhicules guidés autonomes (AGV) dans un environnement dynamique, le procédé (100) comprenant :
l'envoi (101), par au moins un AGV passif d'une pluralité d'AGV, d'une diffusion à au moins un AGV actif de la pluralité d'AGV demandant un état de changement d'au moins un modèle d'une pluralité de modèles de l'AGV ou des AGV actifs, la pluralité de modèles de l'AGV ou des AGV actifs étant utilisée par un service (312) de décision et un service (302) de détection d'objets de l'AGV ou des AGV actifs pour la navigation ;
la réception (102), par l'AGV ou les AGV passifs, de l'état de changement du ou des modèles de la pluralité de modèles de l'AGV ou des AGV actifs, en réponse à la diffusion ;
la détermination (103), par l'AGV ou les AGV passifs, du changement du ou des modèles de la pluralité de modèles de l'AGV ou des AGV actifs et de données ayant causé le changement du ou des modèles de la pluralité de modèles de l'AGV ou des AGV actifs ;
l'entraînement (104), par l'AGV ou les AGV passifs, d'au moins un modèle correspondant de l'AGV ou des AGV passifs d'après le changement du ou des modèles de la pluralité de modèles de l'AGV ou des AGV actifs et les données ayant causé le changement du ou des modèles de la pluralité de modèles de l'AGV ou des AGV actifs ; et
la gestion (105), par l'AGV ou les AGV passifs, de la navigation de l'AGV ou des AGV passifs lorsque l'AGV ou les AGV passifs deviennent actifs dans l'environnement dynamique sur la base du ou des modèles correspondants entraînés de l'AGV ou des AGV passifs.

2. Procédé (100) selon la revendication 1, l'entraînement du ou des modèles correspondants de l'AGV ou des AGV passifs étant effectué à l'aide d'un service (304) d'apprentissage par renforcement.

3. Procédé (100) selon la revendication 1 ou 2, la navigation dans l'environnement dynamique étant basée sur une position actuelle de l'AGV ou des AGV actifs au sein de l'environnement dynamique et au moins un objet rencontré par l'AGV ou les AGV actifs sur leur trajectoire de navigation, l'objet ou les objets rencontrés par l'AGV ou les AGV actifs sur leur trajectoire de navigation étant fournis par le service (302) de détection d'objets de l'AGV ou des AGV actifs.

4. Procédé (100) selon l'une quelconque des revendications 1 à 3, l'AGV ou les AGV passifs étant stationnés dans une zone de charge de l'environnement dynamique.

5. Procédé (100) selon l'une quelconque des revendications 1 à 4, comprenant en outre :
le stockage de fichiers de poids associés à l'entraînement du ou des modèles correspondants de l'AGV ou des AGV passifs à utiliser par le service (302) de détection d'objets et le service (312) de décision de l'AGV ou des AGV passifs lorsque l'AGV ou les AGV passifs deviennent actifs.

6. Procédé (100) selon l'une quelconque des revendications 1 à 5, l'état de changement du ou des modèles de la pluralité de modèles de l'AGV ou des AGV actifs étant déterminé sur la base d'un changement dans des fichiers de poids associés à l'entraînement du ou des modèles de la pluralité de modèles de l'AGV ou des AGV actifs et le changement dans les fichiers de poids étant représentatif d'au moins un changement dans l'environnement dynamique depuis une dernière communication entre l'AGV ou les AGV actifs et l'AGV ou les AGV passifs.

7. Procédé (100) selon la revendication 6, le ou les changements dans l'environnement dynamique étant déterminé par le service (302) de détection d'objets sur la base d'images de l'environnement dynamique et le service (302) de détection d'objets envoyant une inférence du ou des changements dans l'environnement dynamique au service (312) de décision.

8. Procédé (100) selon la revendication 7, le service (312) de décision utilisant le ou les modèles correspondants entraînés par le service (304) d'apprentissage par renforcement pour générer au moins une instruction pour l'AGV ou les AGV passifs lorsque l'AGV ou les AGV passifs deviennent actifs.

9. Procédé (100) selon l'une quelconque des revendications 1 à 8, comprenant en outre :
la navigation par l'AGV ou les AGV passifs lorsqu'ils deviennent actifs dans l'environnement dynamique sur la base du ou des modèles correspondants entraînés de l'AGV ou des AGV passifs.

10. Système (200) d'un véhicule guidé autonome (AGV) pour gérer la navigation de véhicules guidés autonomes (AGV) dans un environnement dynamique, le système (200) comprenant :
une interface configurée pour envoyer une diffusion à au moins un AGV actif de la pluralité d'AGV demandant un état de changement d'au moins un modèle d'une pluralité de modèles de l'AGV ou des AGV actifs, la pluralité de modèles de l'AGV ou des AGV actifs étant utilisée par un service de décision et un service de détection d'objets de l'AGV ou des AGV actifs pour la navigation ;
un processeur (204) ; et
une mémoire (206) couplée au processeur (204), la mémoire (206) comprenant des instructions qui, lorsqu'elles sont exécutées par le processeur (204), configurent le processeur (204) pour :
recevoir l'état de changement du ou des modèles de la pluralité de modèles de l'AGV ou des AGV actifs, en réponse à la diffusion émise par l'AGV ou les AGV passifs ;
déterminer le changement du ou des modèles de la pluralité de modèles de l'AGV ou des AGV actifs et des données ayant causé le changement du ou des modèles de la pluralité de modèles de l'AGV ou des AGV actifs ;
entraîner au moins un modèle correspondant de l'AGV ou des AGV passifs d'après le changement du ou des modèles de la pluralité de modèles de l'AGV ou des AGV actifs et les données ayant causé le changement du ou des modèles de la pluralité de modèles de l'AGV ou des AGV actifs, pour naviguer dans l'environnement dynamique ; et
gérer la navigation de l'AGV ou des AGV passifs lorsque l'AGV ou les AGV passifs deviennent actifs dans l'environnement dynamique sur la base du ou des modèles correspondants entraînés de l'AGV ou des AGV passifs.

11. Produit-programme informatique, comprenant un code de programme informatique qui, lorsqu'il est exécuté par un processeur (204), amène le processeur (204) à réaliser le procédé (100) selon l'une des revendications 1 à 9.

12. Support lisible par ordinateur comprenant un produit-programme informatique comprenant un code de programme informatique qui, lorsqu'il est exécuté par un processeur (204), amène le processeur (204) à réaliser le procédé (100) selon l'une des revendications 1 à 9.
